# EUROPÄISCHE PATENTSCHRIFT

(11) **EP 0 616 604 B1**
(45) Veröffentlichungstag und Bekanntmachung des Hinweises auf die Patenterteilung: **09.09.1998**
(21) Anmeldenummer: 93914710.4
(22) Anmeldetag: 24.06.1993
(51) Int. Cl.: C03B 7/12

(54) **VORRICHTUNG ZUR AUFTRENNUNG EINES ODER MEHRERER STRÄNGE SCHMELZFLÜSSIGEN GLASES IN EINZELNE GLASPOSTEN**
DEVICE FOR SEPARATING ONE OR MORE STRANDS OF MOLTEN GLASS INTO INDIVIDUAL POSTS
DISPOSITIF POUR LA SEPARATION D'UN OU DE PLUSIEURS CORDONS DE VERRE EN FUSION EN DIFFERENTES PARAISONS

(30) Priorität: 08.07.1992 DE 4222310
(43) Veröffentlichungstag der Anmeldung: 28.09.1994
(73) Patentinhaber: GPS GLASPRODUKTIONS-SERVICE GMBH, 45329 Essen (DE)
(72) Erfinder: DAUM, Hans, Jürgen, D-7974 Aichstetten (DE); BLASKOWITZ, Wolfgang, D-4650 Gelsenkirchen-Buer (DE)
(74) Vertreter: Spalthoff, Adolf, Dipl.-Ing.
(86) Internationale Anmeldenummer: EP9301610
(87) Internationale Veröffentlichungsnummer: WO9401371

(56) Entgegenhaltungen:
- DE-C- 4 104 495
- US-A- 4 728 354

## Beschreibung

Die Erfindung bezieht sich auf eine Vorrichtung zur Auftrennung eines oder mehrerer Stränge schmelzflüssigen Glases in einzelne Glasposten nach dem Oberbegriff des Patentanspruchs 1.

Derzeit bekannte Vorrichtungen der vorstehend geschilderten Gattung sind entweder vergleichsweise kompliziert aufgebaut oder sie genügen nicht den an die Simultanität der Bewegungen der Tragarme und/oder an die Positioniergenauigkeit der Bauteile der Vorrichtung gestellten Anforderungen.

Die US-A-4 728 354 zeigt eine Vorrichtung zur Auftrennung eines oder mehrerer Stränge schmelzflüssigen Glases in einzelne Glasposten, bei der die Scherblätter an translatorisch zueinander bewegbaren Tragelementen befestigt sind. Hierbei wird die translatorische Bewegung der Tragelemente durch eine Rotationswelle erzeugt, an deren einander entgegengesetzten Enden jeweils ein Kurbelarm vorgesehen ist. Jeder Kurbelarm ist mittels einer Kurbelstange mit einem der beiden sich translatorisch zueinander bewegenden Tragelemente verbunden. Diese bekannte Vorrichtung wird nicht von einer zweisinnig antreibbaren Kurbelwelle angetrieben und hat daher aufgrund der sich ergebenden vergleichsweise großen Länge der Kurbelstangen einen erhöhten Raumbedarf. Darüber hinaus ist das wellenferne Ende der Kurbelstangen unmittelbar an dem die Scherblätter aufweisenden Tragelement gelenkig gelagert. Aufgrund der bei der Kurbelbewegung auftretenden vergleichsweise hohen Kräfte, die in das Tragelement eingeleitet werden, können sich nach einer relativ kurzen Nutzungsdauer Gangungenauigkeiten ergeben.

Aus der DE-C-4 104 495 ist eine Vorrichtung zur Auftrennung eines oder mehrerer Stränge schmelzflüssigen Glases in einzelne Glasposten bekannt, die eine der Anzahl aufzutrennender Stränge entsprechende Anzahl Scherblattpaare und Tragarme aufweist, wobei an jedem Tragarm jeweils ein Scherblatt eines Scherblattpaares angebracht ist. Die Tragarme sind jeweils um eine Achse schwenkbar. Bei der Schwenkbewegung der Tragarme werden die Scherblätter der beiden Scherblattpaare aufeinander zu- bzw. voneinander wegbewegt. Der Antrieb für die Schwenkbewegung der Tragarme erfolgt über eine zweisinnig antreibbare Kurbelwelle, deren Kurbel zwei Kurbelzapfen aufweist, die den gleichen Abstand zur Längsachse der Kurbelwelle aufweisen und einander diametral entgegengesetzt auf der Kurbel angeordnet sind. Diese Kurbelzapfen sind mittels Laschen mit an den Tragarmen vorgesehenen Zapfen verbunden.

Die Kurbel überträgt ihre Kurbelbewegung mittels der Laschen, die sowohl an der Kurbel als auch an den Tragarmen verschwenkbar angelenkt sind, auf die Tragarme. Die Drehbewegung der Kurbel wird somit in eine Drehbewegung der Tragarme um deren senkrechte Achsen umgesetzt, wobei zwischen der sich drehenden Kurbel und den Tragarmen eine Lasche vorgesehen ist, die ihrerseits sowohl um den kurbelseitigen Zapfen als auch um den tragarmseitigen Zapfen drehbar ist. Aufgrund der Vielzahl zueinander verschwenkbarer Übertragungsteile ergeben sich somit schon nach einer vergleichsweise kurzen Nutzungsdauer dieser bekannten Vorrichtung zur Auftrennung eines oder mehrerer Stränge schmelzflüssigen Glases in einzelne Glasposten Gangungenauigkeiten, die zu unterschiedlich bemessenen Glasposten führen können. Des weiteren läßt sich, sofern mehr als ein Scherblattpaar vorgesehen ist, kein exakt gleichzeitiges Abtrennen der Glasposten von unterschiedlichen Glassträngen erzielen. Sowohl durch die aufgrund der Vielzahl zueinander verschwenkbarer Übertragungsteile auftretenden Paßungenauigkeiten als auch aufgrund des nicht exakt gleichzeitigen Abtrennens der Glasposten von unterschiedlichen Glassträngen ergibt sich ein erhöhter steuerungstechnischer Aufwand.

Der Erfindung liegt die Aufgabe zugrunde, die gattungsgemäße Vorrichtung zur Auftrennung eines oder mehrerer Stränge schmelzflüssigen Glases in einzelne Glasposten derart weiterzubilden, daß einerseits eine langfristiger einhaltbare Ganggenauigkeit der zwischen der Kurbelwelle und den Scherblättern angeordneten Übertragungsteile erzielt wird und andererseits ein exakt gleichzeitiges Abtrennen der Glasposten von mehreren unterschiedlichen Glassträngen möglich ist.

Diese Aufgabe wird erfindungsgemäß dadurch gelöst, daß jede Kurbelstange an ihrem kurbelzapfenfernen Ende mit einem bei der Kurbel- bzw. Schwenkbewegung der Kurbelstange sich linear hin- und herbewegenden Steillteil verbunden ist, welches seinerseits in Antriebsverbindung mit dem entsprechenden Tragarm ist. Eine Schwenkbewegung findet im Falle der erfindungsgemäßen Vorrichtung lediglich noch zwischen den Kurbelstangen und den kurbelwellenseitigen Kurbelzapfen und stellteilseitigen Zapfen statt, wobei diese beiden Schwenkbewegungen in unmittelbarer mechanischer Abhängigkeit voneinander erfolgen. Die Drehung der Kurbelwelle bzw. die Kurbelbewegung der Kurbelstangen wird unmittelbar in eine lineare Translationsbewegung des Stellteils gewandelt, die weiter auf die Tragarme übertragen wird. Auf die Tragarme wird somit bereits eine translatorische Bewegung übertragen. Die Stellteile dienen einerseits dazu, die von den Kurbelstangen ausgeführten Kurbelbewegungen in lineare, translatorische Hin- und Herbewegungen umzuwandeln, und des weiteren dazu, diese bereits in lineare Hin- und Herbewegungen umgewandelten Bewegungsabläufe so auf die Tragarme zu übertragen. Auf die Tragarme werden somit keine Kraftkomponenten übertragen, deren Wirkungslinien nicht parallel zu der Bewegungsrichtung der Tragarme lägen. Aufgrund der Verringerung der sich bei der Aufeinanderzu- und der Voneinanderwegbewegung der Tragarme zueinander bewegenden Übertragungsteile ergibt sich eine auch langfristig andauernde Erhöhung der Ganggenauigkeit der Vorrichtung im Vergleich zum Stand der Technik. Da die Aufeinanderzu- und die Voneinanderwegbewegung der Tragarme translatorisch erfolgt, ist es möglich, Glasposten von unterschiedlichen Glassträngen exakt zeitgleich zu schneiden, wodurch sich die bereits erwähnten Minderungen im Steuerungsaufwand ergeben.

Wenn das Stellteil als Klemmleiste ausgebildet ist, die an einer geradlinig geführten, an ihrem klemmleistenfernen Ende mit dem entsprechenden Tragarm verbundenen Stabanordnung befestigbar ist, wird eine exakt geradlinige Hubbewegung des Tragarms erzielt, mittels der ein gleichbleibend qualitativ hochstehender Schneidvorgang gewährleistet werden kann.

Eine weitere Verbesserung der Positioniergenauigkeit der Tragarme und damit der Scherblätter ergibt sich, wenn die mit der Klemmleiste zusammenwirkende Stabanordnung zumindest zwei doppelt gelagerte, zueinander parallel angeordnete Stäbe bzw. Rohre aufweist.

Zur weiteren Erhöhung der Positioniergenauigkeit der Bauteile der Vorrichtung ist in einer bevorzugten Ausführungsform jeder Stab in einem ersten Lager, welches auf der der Kurbelwelle zugewandten Seite der Klemmleiste angeordnet ist, und in einem zweiten Lager, welches auf der der Kurbelwelle abgewandten Seite der Klemmleiste angeordnet ist, geführt und gehaltert, wobei der Abstand zwischen dem ersten und dem zweiten Lager in Bewegungsrichtung der Klemmleiste ausreichend ist, um jeden beim Betrieb und bei der Wartung der Vorrichtung erforderlichen Hub der Klemmleiste zuzulassen.

Sofern die beiden Kurbelzapfen auf einer dreh- und axialfest zur Kurbelwelle angeordneten Kurbelscheibe angeordnet sind, kann der seitens der Kurbelstangen erzeugte Hub in Abhängigkeit vom Durchmesser der Kurbelscheibe vergrössert werden.

Eine besonders verschleißfreie und damit betriebssichere Ausgestaltung der erfindungsgemäßen Vorrichtung ergibt sich, wenn jeder Kurbelzapfen die ihm zugeordnete Kurbelstange durchdringt, wobei der erste Kurbelzapfen an seinem kurbelscheibenfernen Ende an einer ersten Lagerscheibe gehaltert ist, die dreh- und axialfest mit der Kurbelwelle verbunden ist, und der zweite Kurbelzapfen an seinem kurbelscheibenfernen Ende an einer zweiten Lagerscheibe gehaltert ist, die dreh- und axialfest mit einer zur Kurbelwelle fluchtend gelagerten Lagerwelle verbunden ist, und wobei der Abstand zwischen der Kurbelscheibe und den Lagerscheiben etwa der Abmessung der Kurbelstange in Achsrichtung der Kurbelwelle entspricht. Hierdurch wird darüber hinaus eine zuverlässige Fixierung der Kurbelstangen in Achsrichtung der Kurbelwelle erreicht, was zur Vergleichmäßigung des Kurbelhubs der Kurbelstangen beiträgt.

Vorteilhaft läßt sich die Antriebseinheit als Servomotor ausgestalten, der so geregelt ist, daß die Bewegungsgeschwindigkeit der Tragarme beim Schneiden des Strangs schmelzflüssigen Glases einen Maximalwert erreicht, wodurch ein jeweils optimaler Schneidvorgang gewährleistet wird.

Im folgenden wird die Erfindung an Hand einer Ausführungsform unter Bezugnahme auf die Zeichnung näher erläutert.

Es zeigen:
- Figur 1: eine Draufsicht auf die erfindungsgemäße Vorrichtung zur Auftrennung eines oder mehrerer Stränge schmelzflüssigen Glases in einzelne Glasposten; und
- Figur 2: eine Seitenansicht der Vorrichtung gemäß Figur 1.

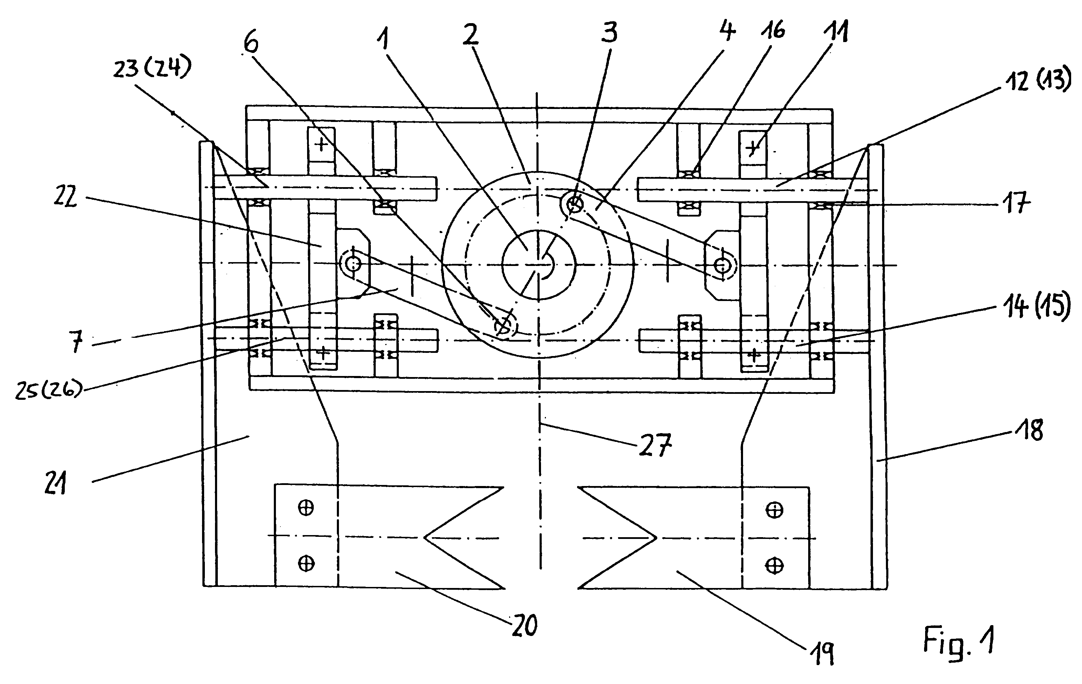

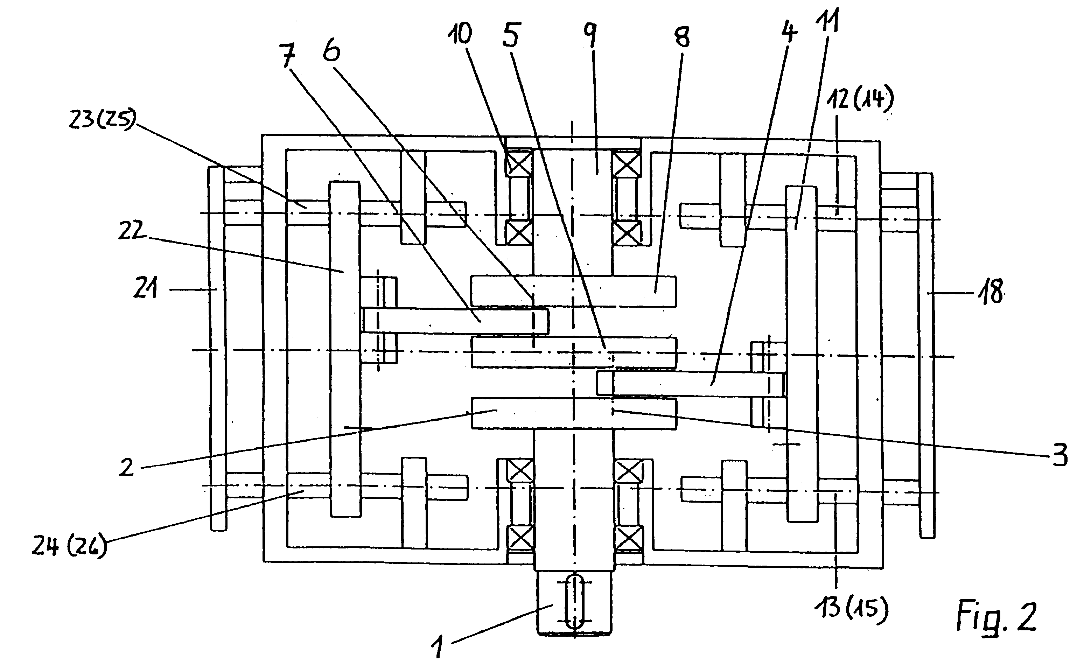

Eine erfindungsgemäße Vorrichtung zur Auftrennung eines oder mehrerer Stränge schmelzflüssigen Glases in einzelne Glasposten, wie sie in den Figuren 1 und 2 dargestellt ist, hat eine in den Figuren nicht dargestellte Antriebseinheit. Hierbei handelt es sich vorteilhaft um einen Servomotor, der über ein ebenfalls nicht dargestelltes Vorschaltgetriebe, welches vorteilhaft ein Übersetzungsverhältnis von i = 10 : 1 aufweist, eine Kurbelwelle 1 antreibt.

Der Servomotor ist so gesteuert, daß seine Drehzahl während des Schneidvorgangs, mit dem im folgenden beschriebene Bauteile der Vorrichtung den Strang schmelzflüssigen Glases in einzelne Glasposten auftrennen, einen Maximalwert erreicht, wodurch der Schneidvorgang optimiert wird. Beim Rücklauf der im folgenden beschriebenen Bauteile wird die Drehzahl des Servomotors gegen Null geregelt, wobei der Servomotor kurz nach seiner Drehrichtungsumkehr in einer Wartestellung verbleibt. Für einen nachfolgenden Schneidvorgang wird der Servomotor innerhalb eines halben Bewegungszyklus von Null auf den Maximalwert der Drehzahl hochgeregelt. Bei dem vorstehend erwähnten Vorschaltgetriebe stehen für die Erhöhung der Drehzahl des Servomotors auf den Maximalwert fünf Umdrehungen des Servomotors zur Verfügung.

Bei dem Vorschaltgetriebe handelt es sich um ein spielarmes Getriebe, um Ungenauigkeiten in der Positionierung der weiteren Bauteile der Vorrichtung weitestgehend auszuschließen.

Am Ausgangsteil des Vorschaltgetriebes sitzt die Kurbelwelle 1, die während eines Arbeitszyklus des Servomotors eine Drehung von 180 Grad in eine Richtung und beim darauf folgenden Arbeitszyklus des Servomotors eine Drehung von 180 Grad in die Gegenrichtung beschreibt.

Die Kurbelwelle 1 ist fest in ihrer Dreh- und in ihrer Axialrichtung mit einer ersten Lagerscheibe 2 verbunden, die koaxial zur Kurbelwelle 1 angeordnet ist. Auf der Rückseite der ersten Lagerscheibe 2 ist ein erster Kurbelzapfen 3 gehaltert.

Der erste Kurbelzapfen 3 durchdringt durch eine entsprechend ausgebildete Bohrung eine erste Kurbelstange 4 und ist mit seinem durch die erste Kurbelstange 4 hinausragenden Abschnitt in der Vorderseite einer Kurbelscheibe 5 gehaltert.

Auf der Rückseite der Kurbelscheibe 5 ist, um 180 Grad versetzt zum ersten Kurbelzapfen 3, ein zweiter Kurbelzapfen 6 gehaltert. Dieser durchdringt durch eine entsprechend ausgebildete Bohrung eine zweite Kurbelstange 7 und ist mit durch die zweite Kurbelstange 7 hinausragendem Abschnitt in der Vorderseite einer zweiten Lagerscheibe 8 gehaltert.

Die zweite Lagerscheibe 8 sitzt dreh- und axialfest auf einer Lagerwelle 9, die mit ihrem lagerscheibenfernen Endabschnitt drehbar in einer Wellenlagerung 10 gelagert ist.

Die sich an die erste Kurbelstange 4 anschließenden Bauteile der Vorrichtung entsprechen hinsichtlich ihrer Ausgestaltung, Funktion und Wirkung den sich an die zweite Kurbelstange 7 anschließenden Bauteilen, so daß im folgenden nur erstere beschrieben werden.

Die erste Kurbelstange 4 ist an ihrem kurbelzapfenfernen Ende an ein als Klemmleiste 11 ausgebildetes Stellteil angelenkt. Die Klemmleiste 11 weist vier Bohrungen auf, an denen sie mittels im einzelnen nicht dargestellter Klemmvorrichtungen fest auf vier Stäbe bzw. Rohre, die als Hohlwellen 12, 13, 14, 15 ausgebildet sind, aufgeklemmt ist.

Jede Hohlwelle 12, 13, 14, 15 ist in einem ausreichenden Abstand beidseitig der Klemmleiste 11 in jeweils einem ersten Lager 16 und einem zweiten Lager 17 in Hubrichtung der ersten Kurbelstange 4 verschieblich gelagert und geführt, so daß die Kurbelbewegung bzw. der Kurbelhub der ersten Kurbelstange 4 in eine lineare Hin- und Herbewegung der Klemmleiste 11 umgesetzt wird.

An ihren kurbelstangenfernen Enden sind die parallel zueinander angeordneten und gleichlangen Hohlwellen 12, 13, 14, 15 fest mit einem Halteabschnitt eines ersten Tragarms 18 verbunden.

Am ersten Tragarm 18 ist ein erstes Scherblatt 19 angeordnet, welches mit einem zweiten Scherblatt 20, das an einem zweiten Tragarm 21, der entsprechend dem ersten Tragarm 18 mittels einer zweiten Klemmleiste 22 und weiteren Hohlwellen 23, 24, 25, 26 an die zweite Kurbelstange 7 angeschlossen ist, angebracht ist, ein den nicht dargestellten Strang schmelzflüssigen Glases durchtrennendes Scherblattpaar 19, 20 bildet.

Im folgenden wird die Funktionsweise der vorstehend geschilderten Vorrichtung zur Auftrennung eines oder mehrerer Stränge schmelzflüssigen Glases in einzelne Glasposten beschrieben.

In einer Anfangsstellung befinden sich beide Kurbelzapfen 3, 6 auf einer in Figur 1 dargestellten Strichpunktlinie 27.

Bei einer Drehung der Kurbelwelle 1 aus der Anfangsstellung um 90 Grad im Uhrzeigersinn wandern die Klemmleisten 11, 22 aus ihrer nächst zur Kurbelwelle 1 gelegenen in ihre am weitesten entfernt zur Kurbelwelle 1 gelegene Position, d.h., die Tragarme 18, 21 werden aus der Schneid- in die Wartestellung bewegt.

Bei einer weiteren Drehung der Kurbelwelle 1 um 90 Grad im Uhrzeigersinn wandern die Klemmleisten 11, 22 aus ihrer am weitesten entfernt zur Kurbelwelle 1 gelegenen in ihre nächst zur Kurbelwelle 1 gelegene Position, d.h., die Tragarme 18, 21 werden aus der Warte- in die Schneidstellung bewegt.

## Patentansprüche

1. Vorrichtung zur Auftrennung eines oder mehrerer Stränge schmelzflüssigen Glases in einzelne Glasposten mit einer der Anzahl aufzutrennender Stränge entsprechenden Anzahl Scherblattpaare (19, 20), wobei ein Scherblatt (19) jedes Scherblattpaares (19, 20) an einem ersten Tragarm (18) und das andere Scherblatt (20) jedes Scherblattpaares (19, 20) an einem zweiten Tragarm (21) angeordnet ist und die Tragarme (18, 21) aufeinander zu- und voneinander wegbewegbar sind, und mit einer Antriebseinheit für die Aufeinanderzu- und die Voneinanderwegbewegung der Tragarme (18, 21), wobei die Antriebseinheit eine zweisinnig antreibbare Kurbelwelle (1) aufweist, mit der zwei um 180 Grad zueinander versetzte Kurbelzapfen (3, 6) bewegbar sind, von denen der erste (3) über eine erste Kurbelstange (4) in Antriebsverbindung mit dem ersten Tragarm (18) und der zweite (6) über eine zweite Kurbelstange (7) in Antriebsverbindung mit dem zweiten Tragarm (21) steht, dadurch gekennzeichnet, daß jede Kurbelstange (4, 7) an ihrem kurbelzapfenfernen Ende mit einem bei der Kurbel- bzw. Schwenkbewegung der Kurbelstange (4, 7) sich linear hin- und herbewegenden Stellteil (11, 22) verbunden ist, welches seinerseits in Antriebsverbindung mit dem entsprechenden Tragarm (18, 21) ist.

2. Vorrichtung nach Anspruch 1, bei der das Stellteil als Klemmleiste (11, 12) ausgebildet ist, die an einer geradlinig geführten, an ihrem klemmleistenfernen Ende mit dem entsprechenden Tragarm (18, 21) verbundenen Stabanordnung (12, 12, 14, 15; 23, 24, 25, 26) befestigbar ist.

3. Vorrichtung nach Anspruch 2, bei der die Stabanordnung zumindest zwei doppelt gelagerte, zueiander parallel angeordnete Stäbe bzw. Rohre aufweist.

4. Vorrichtung nach Anspruch 2 oder 3, bei der jeder Stab (12) in einem ersten Lager (16), welches auf der der Kurbelwelle (1) zugewandten Seite der Klemmleiste (11) angeordnet ist, und in einem zweiten Lager (17), welches auf der der Kurbelwelle (1) abgewandten Seite der Klemmleiste (11) angeordnet ist, geführt und gehaltert ist, wobei der Abstand zwischen dem ersten (16) und dem zweiten Lager (17) in Bewegungsrichtung der Klemmleiste (11) ausreichend ist, um jeden beim Betrieb und bei der Wartung der Vorrichtung erforderlichen Hub der Klemmleiste (11) zuzulassen.

5. Vorrichtung nach einem der Ansprüche 1 bis 4, bei der die beiden Kurbelzapfen (3, 6) auf einer dreh- und axialfest zur Kurbelwelle (1) angeordneten Kurbelscheibe (5) angeordnet sind.

6. Vorrichtung nach Anspruch 5, bei der jeder Kurbelzapfen (3, 6) die ihm zugeordnete Kurbelstange (4, 7) durchdringt, wobei der erste Kurbelzapfen (3) an seinem kurbelscheibenfernen Ende an einer ersten Lagerscheibe (2) gehaltert ist, die dreh- und axialfest mit der Kurbelwelle (1) verbunden ist, und der zweite Kurbelzapfen (6) an seinem kurbelscheibenfernen Ende an einer zweiten Lagerscheibe (8) gehaltert ist, die dreh- und axialfest mit einer zur Kurbelwelle (1) fluchtend gelagerten Lagerwelle (9) verbunden ist, und wobei der Abstand zwischen der Kurbelscheibe (5) und den Lagerscheiben (2, 8) etwa der Abmessung der Kurbelstangen (4, 7) in Achsrichtung der Kurbelwelle (1) entspricht.

7. Vorrichtung nach einem der Ansprüche 1 bis 6, bei der als Antriebseinheit ein Servomotor vorgesehen ist, der so geregelt ist, daß die Bewegungsgeschwindigkeit der Tragarme (18, 21) beim Schneiden des Strangs einen Maximalwert erreicht.

## Claims

1. Device for separating one or more strands of molten glass into individual gobs, the device having a number of pairs of shearing blades (19, 20) corresponding to the number of strands to be separated, one shearing blade (19) of each pair of shearing blades (19, 20) being arranged on a first supporting arm (18) and the other shearing blade (20) of each pair of shearing blades (19, 20) being arranged on a second supporting arm (21) and the supporting arms (18, 21) being moveable towards one another and away from one another, and the device having a drive unit for the movement of the supporting arms (18, 21) towards one another and away from one another, the drive unit having a crankshaft (1) which can be driven in two directions and by means of which two crank pins (3, 6), offset at 180 degrees to one another, are moveable, of which the first (3) is drivingly connected to the first supporting arm (18) via a first connecting rod (4) and the second (6) is drivingly connected to the second supporting arm (21) via a second connecting rod (7), characterised in that each connecting rod (4, 7) is connected at its end remote from the crank pin to an operating element (11, 22) which moves linearly back and forth with the cranking or rotating movement of the connecting rod (4, 7) and which in turn is drivingly connected to the corresponding supporting arm (18, 21).

2. Device according to claim 1, wherein the operating element is in the form of a clamping strip (11, 12) which is attachable to a rectilinearly guided rod arrangement (12, 12, 14, 15; 23, 24, 25, 26) connected at its end remote from the clamping strip to the corresponding supporting arm (18, 21).

3. Device according to claim 2, wherein the rod arrangement has at least two rods or tubes which have two bearings and which are arranged parallel with one another.

4. Device according to claim 2 or 3, wherein each rod (12) is guided and held in a first bearing (16), which is arranged on the side of the clamping strip (11) facing the crankshaft (1), and in a second bearing (17), which is arranged on the side of the clamping strip (11) remote from the crankshaft (1), the distance between the first (16) and the second bearing (17) in the direction of movement of the clamping strip (11) being sufficient to permit any travel of the clamping strip (11) necessary when operating and maintaining the device.

5. Device according to any one of claims 1 to 4, wherein the two crank pins (3, 6) are arranged on a crank disc (5) arranged in a rotationally and axially secure manner relative to the crankshaft (1).

6. Device according to claim 5, wherein each crank pin (3, 6) penetrates the connecting rod (4, 7) associated with it, the first crank pin (3) being held at its end remote from the crank disc on a first bearing disc (2) which is connected to the crankshaft (1) in a rotationally and axially secure manner and the second crank pin (6) being held at its end remote from the crank disc on a second bearing disc (8) which is connected in a rotationally and axially secure manner to a bearing shaft (9) arranged in alignment with the crankshaft (1), and the distance between the crank disc (5) and the bearing discs (2, 8) corresponding approximately to the dimension of the connecting rods (4, 7) in the axial direction of the crankshaft (1).

7. Device according to any one of claims 1 to 6, wherein a servomotor is provided as the drive unit and is controlled so that the speed of movement of the supporting arms (18, 21) reaches a maximum value when the strand is being cut.

## Revendications

1. Dispositif pour découper en paraisons une ou plusieurs barres de verre fondu, comportant des paires de lames (19, 20) en nombre égal au nombre de barres à couper, une lame (19) de chacune des paires de lames (19, 20) étant montée sur un premier bras support (18) et l'autre lame (20) de chacune des paires de lames (19, 20) étant montée sur un deuxième bras support (21) et les bras support (18, 21) pouvant être rapprochés et éloignés l'un de l'autre, ainsi qu'une unité d'entraînement pour rapprocher et éloigner l'un de l'autre les bras supports (18, 21), l'unité d'entraînement présentant un vilebrequin (1) qui peut être mû dans les deux sens par l'intermédiaire duquel deux manetons (3, 6) mutuellement décalés de 180 degrés sont déplacés, le premier maneton (3) étant en relation d'entraînement avec le premier bras support (18) par l'intermédiaire d'une première bielle (4) et le deuxième maneton (6) étant en relation d'entraînement avec le deuxième bras support (21) par l'intermédiaire d'une deuxième bielle (7), caractérisé par le fait que chaque bielle (4, 7), à son extrémité éloignée du maneton, est liée à un élément de réglage (11, 22) qui se déplace suivant un mouvement linéaire de va-et-vient lors de la rotation ou de l'oscillation de la bielle (4, 7) et qui, à son tour, est en liaison d'entraînement avec le bras support (18, 21) concerné.

2. Dispositif selon la revendication 1, dans lequel l'élément de réglage est agencé sous la forme d'une traverse à serrage qui est fixée à un système de barres (12, 13, 14, 15; 23, 24, 25, 26) guidé linéairement et relié au bras support (18, 21) concerné à son extrémité éloignée de la traverse à serrage.

3. Dispositif selon la revendication 2, dans lequel le système de barres présente au moins deux barres ou deux tubes mutuellement parallèles qui sont supportés en deux points.

4. Dispositif selon la revendication 2 ou 3, dans lequel chaque barre (12) est guidée et soutenue dans un premier palier (16) qui est disposé du côté de la traverse à serrage (11) tourné vers le vilebrequin (1) et dans un deuxième palier (17) qui est disposé du côté de la traverse à serrage (11) éloigné du vilebrequin (1), la distance entre le premier palier (16) et le deuxième palier (17) dans la direction de déplacement de la traverse à serrage (11) étant suffisante pour permettre toute course nécessaire de la traverse à serrage (11) lors du fonctionnement et lors de l'entretien du dispositif..

5. Dispositif selon une des revendications 1 à 4, dans lequel les deux manetons (3, 6) sont disposés sur une joue de vilebrequin (5) solidaire en rotation et axialement du vilebrequin (1).

6. Dispositif selon la revendication 5, dans le quel chaque maneton (3, 6) traverse la bielle (4, 7) qui lui est associée, le premier maneton (3), à son extrémité éloignée de la joue de vilebrequin étant fixé à une première joue d'appui (2) qui est solidaire en rotation et axialement du vilebrequin (1) et le deuxième maneton (6), à son extrémité éloignée de la joue de vilebrequin, étant fixé à une deuxième joue d'appui (8) qui est solidaire en rotation et axialement d'un arbre d'appui (9) monté dans l'alignement du vilebrequin (1), la distance entre la joue de vilebrequin (5) et les joues d'appui (2, 8) correspondant sensiblement à la dimension des bielles (4, 7) dans la direction axiale du vilebrequin (1).

7. Dispositif selon une des revendications 1 à 6, dans lequel il est prévu comme unité d'entraînement un servomoteur qui est régulé de telle sorte que la vitesse de déplacement des bras supports (18, 21) lors de la coupe de la barre atteigne une valeur maximale.
